# EUROPÄISCHE PATENTANMELDUNG

(11) **EP 0 960 773 A2**
(43) Veröffentlichungstag der Anmeldung: **01.12.1999**
(21) Anmeldenummer: 99110041.3
(22) Anmeldetag: 21.05.1999
(51) Int. Cl.: B60Q 1/04

(54) **Tragelement**

(30) Priorität: 29.05.1998 DE 19824051
(71) Anmelder: Hella KG Hueck & Co., 59552 Lippstadt (DE)
(72) Erfinder: Honig, Hans-Henning, 33154 Salzkotten (DE)

(57) **Zusammenfassung**

Tragelement (3) zum Verschwenken eines Reflektors (2) eines Fahrzeugscheinwerfers (1) um eine horizontale (6) und um eine vertikale Achse (7) mit einem in vertikaler Richtung an einem oberen Ende eines Brückenteiles (12) angeordneten oberen Gelenkteil (8) und einem in vertikaler Richtung an einem unteren Ende angeordneten unteren Gelenkteil (10), wobei das obere Gelenkteil (8) als komplettes einteiliges Gelenk ausgebildet ist, das als Befestigungsteil (17) über ein Filmscharnier (13) seitlich am Brückenteil (12) angelenkt ist.

## Beschreibung

Die Erfindung betrifft ein Tragelement zum Verschwenken mindestens eines Reflektors eines Fahrzeugscheinwerfers um eine horizontale und um eine vertikale Achse mit einem in vertikaler Richtung an einem oberen Ende eines Brückenteiles angeordneten oberen Gelenkteil und einem in vertikaler Richtung an einem unteren Ende angeordneten unteren Gelenkteil.

Aus der DE 93 12 695.6 U1 ist ein Kraftfahrzeugscheinwerfer bekannt, dessen Reflektor über ein Tragelement um eine horizontale Achse und um eine vertikale Achse verschwenkbar ist. Zu diesem Zweck weist das Tragelement an seinem in vertikaler Richtung oberen Ende ein mit seinem Drehpunkt auf der horizontalen Achse liegendes oberes Gelenkteil auf, um das der Reflektor mit Hilfe eines am unteren Ende des Tragelementes angeordneten unteren Gelenkteiles um die horizontale Achse zur Leuchtweitenregulierung drehbar ist. Mit Hilfe eines dritten Gelenkteiles, das auf der horizontalen Achse in einem Abstand zum oberen Gelenkteil angeordnet ist, ist in der Reflektor um die vertikale Achse drehbar.

Nachteilig dabei ist, daß bei einer zusätzlichen Verstellmöglichkeit des oberen Gelenkteiles etwa parallel zur optischen Achse des Reflektors das obere Gelenkteil über ein Zwischenteil mit einem den Reflektor tragenden Gehäuse verbunden werden muß. Dadurch wird relativ viel Platz benötigt, und die Fertigungs- und Montagekosten sind relativ hoch.

Aufgabe der vorliegenden Erfindung ist es daher, den Platzbedarf des oberen Gelenkteiles sowie die Fertigungs- und Montagekosten zu verringern.

Die Aufgabe wird erfindungsgemäß dadurch gelöst, daß das obere Gelenkteil als ein komplettes einteiliges Gelenk ausgebildet ist, das als Befestigungsteil über ein Filmscharnier seitlich am Brückenteil angelenkt ist.

Durch die Ausbildung des oberen Gelenkteiles als komplettes einteiliges Gelenk kann auf die Verwendung eines zusätzlichen Teiles verzichtet werden. Dadurch wird zugleich der für die Anlenkung benötigte Raum verringert, und die Fertigungs- und Montagekosten werden minimiert.

Gemäß einer bevorzugten Ausführungsform der Erfindung ist das Filmscharnier als flacher, etwa rechtwinkliger Arm ausgebildet, der ein quer zu einer Längsachse des Brückenteiles angeordnetes Verbindungsteil aufweist, an dessen dem Brückenteil abgewandten Ende ein etwa parallel zur Längsachse verlaufendes, in seiner Wanddicke reduziertes Flimteil angeordnet ist.

Durch die Reduzierung der Wanddicke des Filmteiles wird die notwendige Flexibilität zur Drehung um die horizontale Achse erzeugt und gleichzeitig wird eine ausreichende Drehung um die vertikale Achse ermöglicht.

Nach einer weiteren bevorzugten Ausführungsform der Erfindung ist das Befestigungsteil als ein zylindrisches Gewindestück ausgebildet, das in einer zylindrischen Führung eines den Reflektor aufnehmenden Gehäuses längsverschieblich etwa parallel zu optischen Achse des Reflektors geführt ist. Das Gewindestück ist über eine Einstellschraube in der zylindrischen Führung verschiebbar. Das Gewindestück weist an seinem der Einstellschraube zugewandten freien Ende eine Kernlochbohrung auf, deren Durchmesser mindestens dem Außendurchmesser des einzuschraubenden Gewindes der Einstellschraube entspricht und die einem zu einem dem freien Ende abgewandten vorderen Ende hin sich konisch verjüngenden Innenkonus aufweist.

Dadurch wird eine platzsparende einfache zylindrische Führung im Gehäuse konzentrisch zur Einstellschraube möglich, Zugleich wird durch die besondere Ausbildung des Kernloches des Führungsteiles das Einschrauben der Einstellschraube ohne Aufbringen einer axialen Kraft ermöglicht. Die selbstanschnäbelnde Einstellschraube führt somit zu einer Montageerleichterung.

Gemäß einer weiteren bevorzugten Ausführungsform der Erfindung ist das untere Gelenkteil als seitlich angebundene Kugelaufnahme einer Anlenkung einer Leuchtweitenregulierung ausgebildet. Die Kugelaufnahme ist dabei über einen flachen Federarm, der in einer in Richtung der optischen Achse verlaufenden Ebene angeordnet ist, an dem Brückenteil angebunden.

Die seitliche Anbindung der Kugelaufnahme ermöglicht eine platzsparende und toleranzausgleichende Anlenkung an die Leuchtweitenregulierung.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

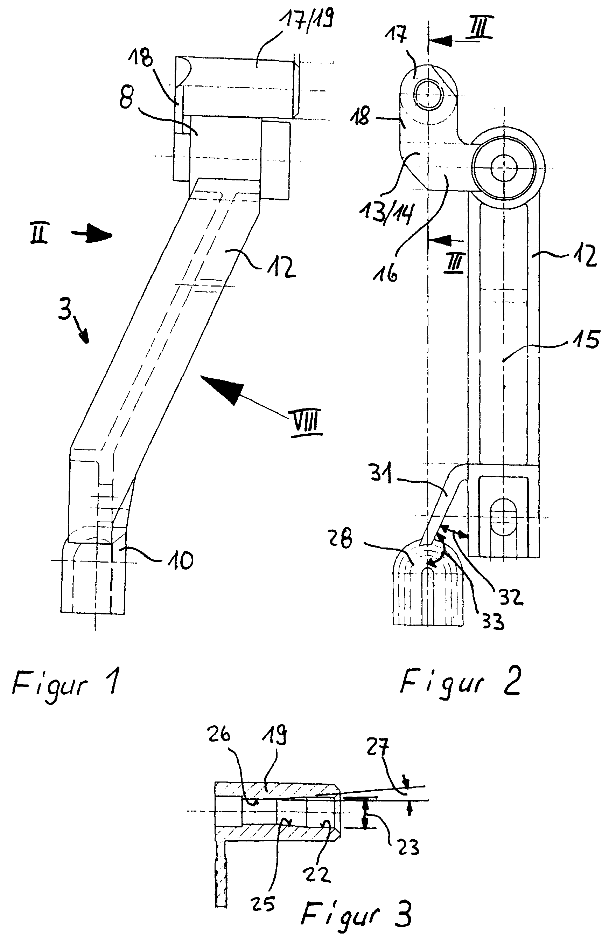

- Figur 1:: Eine Seitenansicht eines Tragelementes,
- Figur 2:: eine Ansicht des Tragelementes von Figur 1 aus Richtung II,

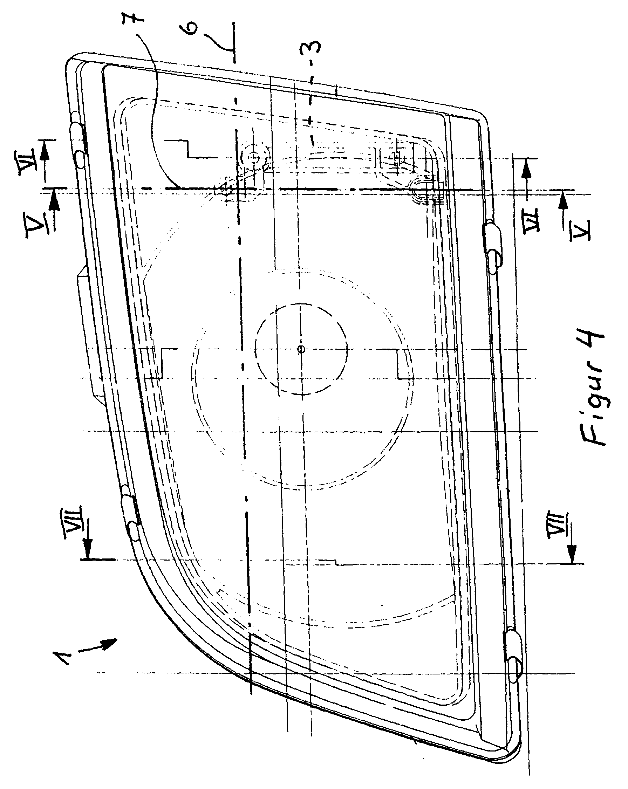

- Figur 3:: eine Seitenansicht eines Führungsteiles entlang der Linie III - III von Figur 1 geschnitten,
- Figur 4:: eine Vorderansicht eines Fahrzeugscheinwerfers mit gestrichelt dargestellten Tragelement,

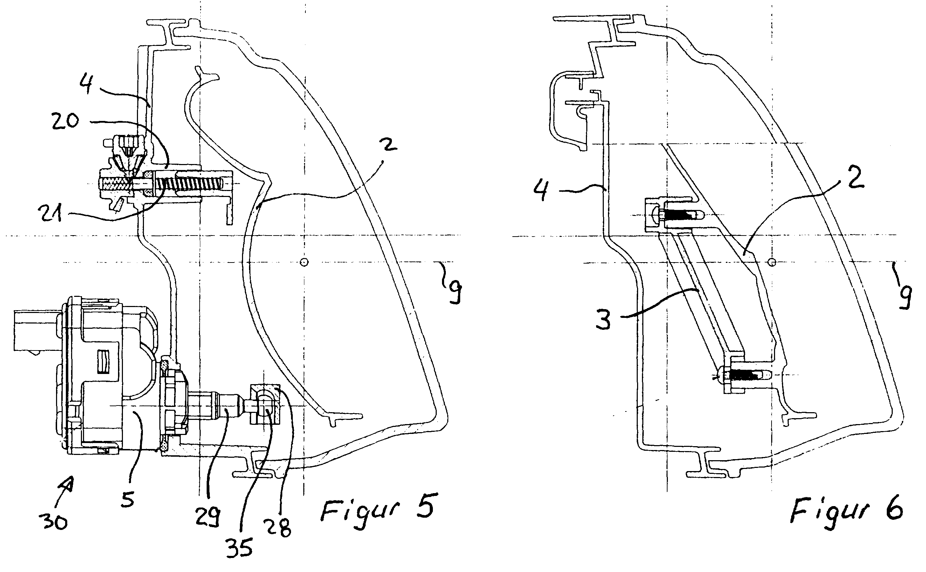

- Figur 5:: eine Seitenansicht des Fahrzeugscheinwerfers von Figur 4 entlang der Linie V - V geschnitten,

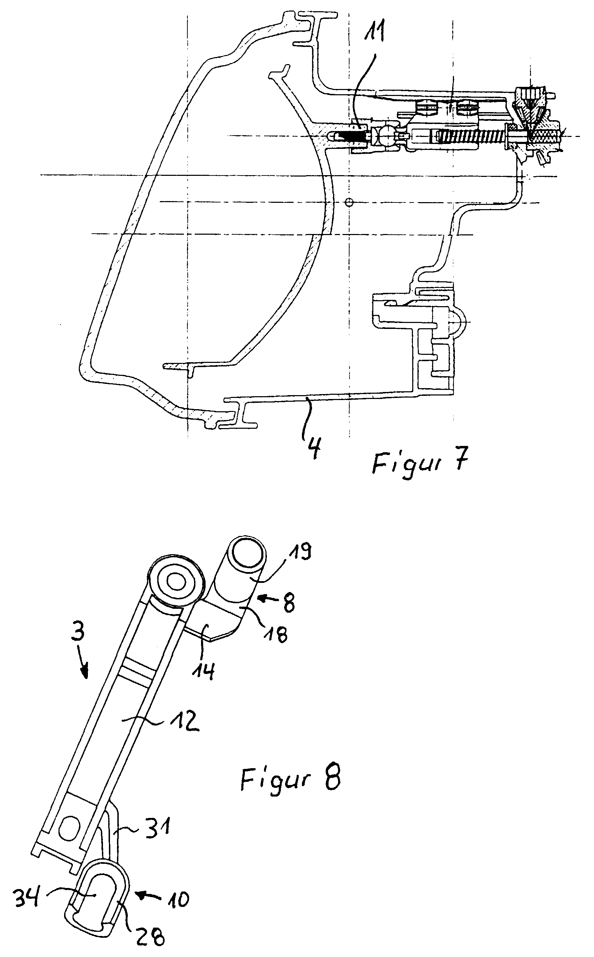

- Figur 6:: eine Seitenansicht des Fahrzeugscheinwerfers von Figur 4 entlang der Linie VI - VI geschnitten,
- Figur 7:: eine Seitenansicht des Fahrzeugscheinwerfers von Figur 4 entlang der Linie VII - VII geschnitten und
- Figur 8:: eine räumliche Darstellung des Tragelementes von Figur 1 aus Richtung VIII.

Ein Fahrzeugscheinwerfer (1) für ein Fahrzeug besteht im wesentlichen aus einem Reflektor (2), einem Tragelement (3), einem Gehäuse (4) und einem Antrieb (5) zur Leuchtweitenregulierung. Der Reflektor (2) ist um eine horizontale Achse (6) und um eine vertikale Achse (7) schwenkbar. Die horizontale Achse (6) verläuft durch ein oberes Gelenkteil (8) quer zur optischen Achse (9) des Reflektors (2). Die vertikale Achse (7) verläuft etwa durch das obere Gelenkteil (8) und durch ein unteres Gelenkteil (10). Die horizontale Achse (6) verläuft in einem Abstand zum oberen Gelenkteil (8) durch ein drittes Gelenkteil (11), das zur vertikalen Einstellung dient.

Das obere Gelenkteil (8) und das untere Gelenkteil (10) sind an einem Brückenteil (12) des Tragelementes (3) angeordnet. Das obere Gelenkteil (8) besteht aus einem Befestigungsteil (17) und ist über ein Filmscharnier (13) seitlich am Brückenteil (12) angelenkt. Das Filmscharnier (13) ist als flacher rechtwinkliger Arm (14) ausgebildet, der ein quer zu einer Längsachse (15) des Brückenteiles (12) angeordnetes Verbindungsteil (16) aufweist. An einem dem Brückenteil (12) abgewandten Ende des Verbindungsteils (16) ist ein in seiner Wanddicke reduziertes Filmteil (18) angeordnet. Das Befestigungsteil (17) ist als ein zylindrisches Gewindestück (19) ausgebildet, das in einer zylindrischen Führung (20) des Gehäuses (4) längsverschieblich etwa parallel zur optischen Achse (9) des Reflektors (2) führbar ist. Das Gewindestück (19) ist über eine Einstellschraube (21) in der zylindrischen Führung (20) verschiebbar.

Das Gewindestück (19) weist an seinem der Einstellschraube (21) zugewandten freien Ende eine Kernlochbohrung (22) auf, deren Innendurchmesser (23) mindestens dem Außendurchmesser des einzuschraubenden Gewindes der Einstellschraube (21) entspricht und die zu einem dem freien Ende abgewandten vorderen Ende (24) hin einen sich konisch verjüngenden Innenkonus (25) aufweist, an dem sich eine zylindrische Anschlußbohrung (26) anschließt. Der Innenkonus (25) weist einen Flankenwinkel (27) von 5 Grad auf.

Das untere Gelenkteil (10) ist als seitlich angebundene Kugelaufnahme (28) einer Anlenkung (29) ausgebildet. Die Anlenkung (29) wird dabei in ihrer Längsrichtung von einem Antrieb (5) einer Leuchtweitenregulierung (30) verschoben. Die Kugelaufnahme (28) ist über einen in einer quer zur optischen Achse (9) angeordneten Ebene federnden Federarm (31) an dem Brückenteil (12) angebunden. Der Federarm (31) verläuft gegenüber der Längsachse (15) des Brückenteiles (12) in einem spitzen Winkel (32) und ist über einen stumpfen Winkel (33) mit der Kugelaufnahme (28) verbunden. Die Kugelaufnahme (28) weist eine Längsnut (34) zur Aufnahme einer an der Anlenkung (29) angeordneten Kugel (35) auf Die Längsnut (34) ist dabei parallel zur Längsachse (15) des Brückenteiles (12) angeordnet.

## Patentansprüche

1. Tragelement zum Verschwenken mindestens eines Reflektors eines Fahrzeugscheinwerfers um eine horizontale und um eine vertikale Achse mit einem in vertikaler Richtung an einem oberen Ende eines Brückenteiles angeordneten oberen Gelenkteil und einem in vertikaler Richtung an einem unteren Ende angeordneten unteren Gelenkteil, dadurch gekennzeichnet, daß das obere Gelenkteil (8) als komplettes einteiliges Gelenk ausgebildet ist, das als Befestigungsteil (17) über ein Filmscharnier (13) seitlich am Brückenteil (12) angelenkt ist.

2. Tragelement nach Anspruch 1, dadurch gekennzeichnet, daß das Filmscharnier (13) als flacher etwa rechtwinkliger Arm (14) ausgebildet ist, der ein quer zu einer Längsachse (15) des Brückenteiles (12) angeordnetes Verbindungsteil (16) aufweist, an dessen dem Brückenteil (12) abgewandten Ende ein etwa parallel zur Längsachse (15) verlaufendes, in seiner Wanddicke reduziertes Filmteil (18) angeordnet ist.

3. Tragelement nach Anspruch 1 oder 2, dadurch gekennzeichnet, daß das Befestigungsteil (17) als zylindrisches Gewindestück (19) ausgebildet ist, das in einer zylindrischen Führung (20) eines den Reflektor (2) aufnehmenden Gehäuses (4) längsverschieblich etwa parallel zur optischen Achse (9) des Reflektors (2) führbar ist.

4. Tragelement nach Anspruch 3, dadurch gekennzeichnet, daß das Gewindestück (19) über eine Einstellschraube (21) in der zylindrische Führung (20) verschiebbar ist.

5. Tragelement nach Anspruch 4, dadurch gekennzeichnet, däß das Gewindestück (20) an seinem der Einstellschraube (21) zugewandten freien Ende eine Kernlochbohrung (22) aufweist, deren Innendurchmesser (23) mindestens dem Außendurchmesser des einzuschraubenden Gewindes der Einstellschraube (21) entspricht und die einen zu einem dem freien Ende abgewandten vorderen Ende (24) hin sich konisch verjüngenden Innenkonus (25) aufweist.

6. Tragelement nach Anspruch 5, dadurch gekennzeichnet, daß zum vorderen Ende hin an den Innenkonus (25) sich eine zylindrische Anschlußbohrung (26) anschließt.

7. Tragelement nach Anspruch 5 oder 6, dadurch gekennzeichnet, daß der Innenkonus (25) einen Flankenwinkel (27) von mindestens einem Grad aufweist.

8. Tragelement nach einem der Ansprüche 1 bis 7, dadurch gekennzeichnet, daß das untere Gelenkteil (10) als seitlich angebundene Kugelaufnahme (28) einer Anlenkung (29) einer Leuchtweitenregulierung (30) ausgebildet ist.

9. Tragelement nach Anspruch 8, dadurch gekennzeichnet, daß die Kugelaufnahme (28) über einen flachen Federarm (31), der in einer in Richtung der optischen Achse (9) verlaufenden Ebene angeordnet ist, an dem Brückenteil angebunden ist.

10. Tragelement nach einem der Ansprüche 1 bis 9, dadurch gekennzeichnet, daß das Filmscharnier (13) von einer Wandung gebildet ist, die in einer quer zur optischen Achse (9) verlaufenden Ebene angeordnet ist.
